# FASCICULE DE BREVET EUROPEEN

(11) **EP 1 406 019 B1**
(45) Date de publication et mention de la délivrance du brevet: **30.11.2005**
(21) Numéro de dépôt: 03292387.2
(22) Date de dépôt: 29.09.2003
(51) Int. Cl.: F04D 29/32, F01D 5/30

(54) **Rotor à tambour pour une turbomachine**
Trommelrotor für eine Turbomaschine
Drum rotor for a turbomachine

(30) Priorité: 02.10.2002 FR 0212169
(43) Date de publication de la demande: 07.04.2004
(73) Titulaire: SNECMA, 75015 Paris (FR)
(72) Inventeur: Mons, Claude, 77176 Savigny le Temple (FR)
(74) Mandataire: Cardy, Sophie Marie

(56) Documents cités:
- FR-A- 2 699 099
- GB-A- 2 265 671
- US-A- 5 820 347

## Description

L'invention concerne un rotor de turbomachine, notamment d'aviation.

Plus particulièrement, la présente invention se rapporte à la réalisation d'un tambour monobloc pour un rotor de turbomachine, en particulier pour un compresseur de type axial, notamment un compresseur fonctionnant à basse pression. Par l'adjectif monobloc, on entend un tambour réalisé en une seule pièce ou en plusieurs parties liées de façon rigide.

Les compresseurs de ce type, utilisés notamment dans les turboréacteurs, sont constitués d'un rotor comprenant, au lieu d'une succession de disques séparés empilés les uns à la suite des autres, un tambour unique destiné à recevoir les séries d'aubes des différents étages.

Classiquement, ce tambour unitaire comporte des saignées réalisées par usinage afin de former entre deux étages voisins un espace dans lequel s'intercalent les aubes des étages statoriques solidarisées à une partie fixe présentant un carter.

De manière habituelle, les aubes sont solidarisées de façon individuelle au tambour au niveau de logements, répartis régulièrement et en nombre égal à celui des aubes, dont la forme est déterminée pour coopérer par complémentarité de forme avec le pied de l'aube, ce qui assure l'immobilisation radiale, par exemple par une fixation du type par queue d'aronde. En ce qui concerne l'immobilisation en translation, notamment axiale, du pied de l'aube par rapport à son logement, elle est assurée le plus souvent séparément pour chaque aube par un système à bille, goupille, agrafe, flasque, entretoise etc.

Le rotor d'un compresseur auquel s'applique l'invention comporte un tambour métallique, de type monobloc, réalisé par usinage d'une pièce brute de forge et qui est équipé d'un raidisseur aval nécessaire pour amortir les déformations radiales, c'est-à-dire pour permettre au tambour de résister aux contraintes, notamment aux contraintes en compression radiale, qui s'exercent, pendant le fonctionnement de la turbomachine.

Ce raidisseur est formé d'une protubérance radiale constituant une saillie radiale dirigée vers l'intérieur (en direction de l'axe longitudinal), c'est-à-dire formant une zone présentant une épaisseur radiale suffisante pour résister mécaniquement, cette zone constituant une partie avec un alésage de diamètre généralement plus faible que le reste du tambour.

Ces tambours sont, la plupart du temps, réalisés dans un alliage à base de titane qui résiste aux contraintes thermiques et mécaniques auxquelles sont soumis les rotors de turbomachine.

En effet, dans les applications aéronautiques pour lesquels les constructeurs s'attachent constamment à réduire les masses, ce type de tambour porteur d'aubes est réalisé avec une épaisseur réduite, en direction radiale, que ce soit dans les zones de retenue des pieds d'aubes ou dans les zones des saignées.

Toutefois, malgré une telle forme avec épaisseur réduite, il est nécessaire de réaliser en premier lieu une pièce de forge relativement épaisse, cette épaisseur importante étant due à la partie aval contenant le raidisseur. L'obtention d'une telle pièce requiert donc l'utilisation d'une grande quantité de matière première, ce qui engendre des coûts importants de matière première et d'usinage ultérieur, ce à quoi s'ajoute la perte en matière issue des copeaux lors de l'usinage.

Une autre technique permet de s'affranchir de la nécessité de recourir à une pièce de forge épaisse : il s'agit d'effectuer le soudage, en particulier le soudage par faisceau d'électrons, d'une pièce rapportée destinée à former le raidisseur. Toutefois, cette technique implique, d'une part, la fabrication (par forge puis usinage) d'une pièce complémentaire et, d'autre part, une opération de soudure longue et coûteuse.

La présente invention a pour objectif de fournir un tambour permettant de s'affranchir des problèmes évoqués précédemment en relation avec l'art antérieur.

A cet effet, la présente invention propose un tambour supportant des aubes, présentant une forme générale cylindrique de révolution autour d'un axe longitudinal, destiné en particulier à former un rotor, réalisé dans un alliage métallique et s'étendant entre une extrémité amont et une extrémité aval le long d'un profil courbe pouvant être circonscrit dans une enveloppe annulaire s'étendant autour dudit axe longitudinal, ledit profil s'étendant radialement autour d'une surface de révolution présentant une génératrice, ladite extrémité aval étant munie d'un raidisseur.

Selon l'invention, ledit raidisseur est muni d'au moins un ensemble composite monté sur ladite extrémité aval, ledit ensemble composite comprenant des fibres et une matrice en polymère.

De cette manière, on comprend que par la présence dudit ensemble composite, on utilise, à l'emplacement dudit raidisseur un matériau au moins aussi résistant que ledit alliage métallique mais qui est plus léger. Egalement un tel raidisseur est facile à mettre en oeuvre.

Cette solution présente ainsi de nombreux avantages, principalement en termes de procédé de fabrication (diminution du coût des matières premières et de l'usinage) et, secondairement, en termes de poids du tambour ainsi obtenu.

De manière préférentielle, le tambour comporte une première partie métallique fabriquée en une seule pièce, en particulier par forgeage et usinage, et une deuxième partie formée dudit raidisseur. De manière avantageuse le tambour selon l'invention se compose uniquement de ces deux pièces, ce qui procure la solution économiquement la plus avantageuse et tout à fait satisfaisante du point de vue de la résistance aux contraintes, en particulier mécanique et thermique.

Selon un premier mode de réalisation du tambour selon la présente invention, ladite extrémité aval délimite un logement annulaire d'axe coaxial avec ledit axe longitudinal, ledit logement étant ouvert radialement vers l'extérieur et ledit ensemble composite est annulaire et bobiné autour de ladite extrémité aval en étant positionné dans ledit logement. Cette solution permet l'obtention d'un raidisseur unique renforçant de manière globale le tambour à l'encontre des forces, en particulier des forces centrifuges dirigées radialement vers l'extérieur, et qui tendent à déformer le tambour.

Selon un deuxième mode de réalisation du tambour selon la présente invention, ladite extrémité aval forme une série de protubérances axiales et ledit raidisseur est formé d'au moins un ensemble composite bobiné en forme de manchon monté sur l'une desdites protubérances. Cette solution, qui met en oeuvre autant d'ensembles composites bobinés en forme de manchon que de protubérances, apporte l'avantage, en cas d'endommagement d'un ou de plusieurs ensembles composites, de permettre de remplacer localement seulement le (ou les) ensembles composites détériorés.

Avantageusement, ledit raidisseur est excentré par rapport à ladite génératrice, en particulier ledit raidisseur est excentré radialement vers l'extérieur par rapport à ladite génératrice : cette solution permet de gagner en efficacité lors des sollicitations crées par la rotation du tambour.

Selon une disposition préférentielle, ledit ensemble composite est formé de fibres longues de carbone bobinées logées dans une matrice en résine thermodurcissable, de préférence de type époxy.

La présente invention porte également sur un compresseur centrifuge axial comprenant, à titre de rotor, un tambour du type précité sur lequel sont fixées des aubes mobiles.

Enfin, la présente invention porte aussi sur un turbo moteur à combustion, en particulier un turboréacteur, comprenant un compresseur du type précité.

D'autres avantages et caractéristiques de l'invention ressortiront à la lecture de la description suivante faite à titre d'exemple et en référence aux dessins annexés dans lesquels :
- la figure 1 montre une demi vue en section partielle de la partie avant d'un turboréacteur, avec la soufflante et un compresseur basse pression équipé d'un tambour selon l'art antérieur,
- la figure 2 montre, de manière agrandie, une demi vue du tambour de la figure 1,
- la figure 3 montre un détail agrandi de l'extrémité aval du tambour de la figure 2 sur lequel apparaît le raidisseur,
- les figures 4A et 4B montrent deux variantes de réalisation d'un tambour selon un premier mode de réalisation de l'invention, et
- les figures 5A et 5B montrent deux variantes de réalisation d'un tambour selon un deuxième mode de réalisation de l'invention.

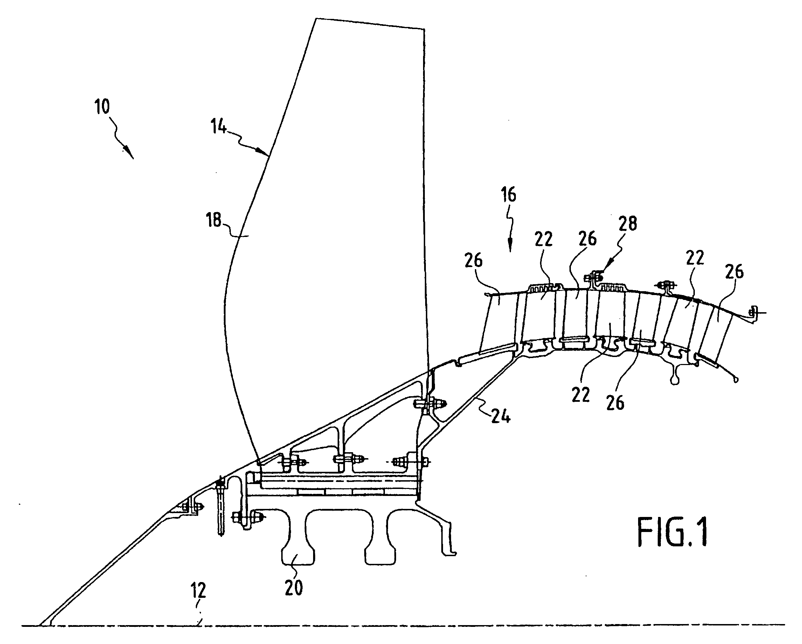

Sur la figure 1 est représentée la section d'une moitié de la partie avant 10 d'un turboréacteur, cette moitié étant située d'un côté de l'axe longitudinal 12 formant l'axe de symétrie de révolution des différents éléments, en particulier des différents éléments mobiles du turboréacteur.

Sur la figure 1, on peut voir plus précisément, parmi les différents éléments disposés axialement autour de l'axe longitudinal 12 et formant la structure conventionnelle d'un tel turboréacteur, une soufflante 14 ("fan") et un compresseur 16 fonctionnant à basse pression.

La soufflante 14 comprend une série d'aubes 18 s'étendant radialement qui sont montées sur un disque annulaire 20 : une seule de ces aubes 18 apparaît sur la figure 1. Il est entendu que le disque 20 et les aubes 18 sont montés en rotation autour de l'axe longitudinal 12 du turboréacteur.

Sur la figure 1, le sens d'écoulement du flux d'air détermine la direction amont (partie gauche de la figure 1) de la partie aval (partie droite de la figure 1).

Il est entendu que pour des raisons de clarté, les autres éléments conventionnels d'un tel turboréacteur, en particulier les éléments situés plus en aval que le compresseur 16 et les éléments situés radialement plus à l'extérieur par rapport à l'axe longitudinal 12, ne sont pas représentés.

Le compresseur 16 comprend plusieurs séries d'aubes mobiles 22 en rotation qui sont montés sur un disque, ou tambour 24, solidaire du disque 20 de la soufflante.

Sur la figure 1, il apparaît trois séries d'aubes mobiles 22 entre lesquelles sont montées cinq séries d'aubes fixes 26 montées sur un carter 28.

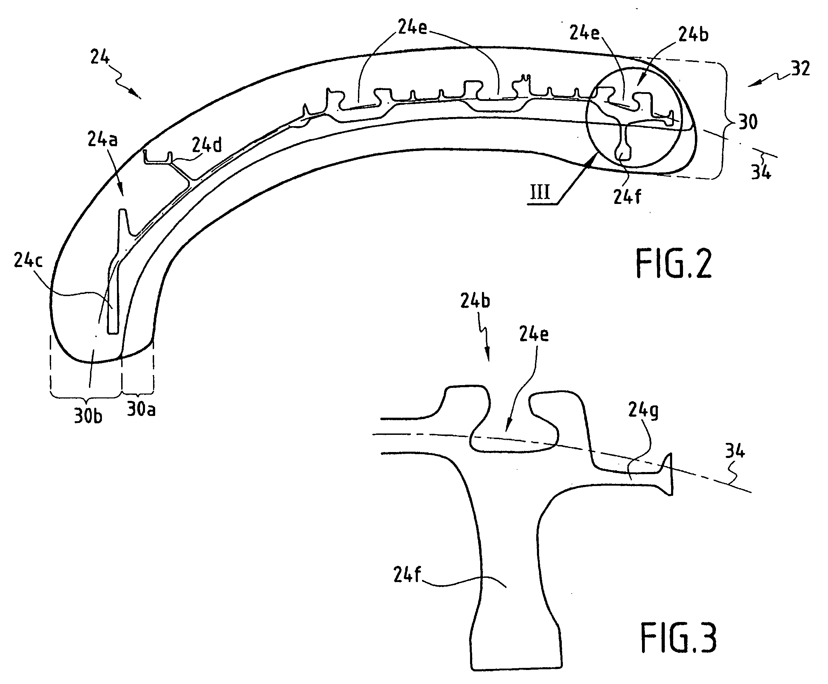

Le tambour 24, mieux visible sur la figure 2, présente donc une forme générale cylindrique de révolution autour de l'axe longitudinal 12 depuis une extrémité amont 24a vers une extrémité aval 24b située à droite de la figure 2. L'extrémité amont 24a est conformée pour permettre la liaison, par exemple par vissage avec le disque annulaire 20 de la soufflante 14 (voir figure 1) au moyen de flasques 24c et 24d.

Entre l'extrémité amont 24a et l'extrémité aval 24b, le tambour 24 monobloc comporte trois rangées de saignées 24e destinées à recevoir, par complémentarité de forme, le pied des aubes mobiles 22.

Au niveau de l'extrémité aval 24b, comme il ressort de manière plus précise de la figure 3 qui illustre un agrandissement de cette extrémité aval 24b, un raidisseur 24f est formé dans le prolongement radial de la saignée 24e située le plus en aval du tambour 24.

Selon l'art antérieur, ce raidisseur 24f est constitué par une extension, c'est-à-dire une protubérance, radiale dirigée en direction de l'axe longitudinal 12 afin de former une nervure annulaire interne qui augmente de manière très importante la résistance mécanique de ce tambour 24, en particulier à l'encontre des forces en compression radiale.

De manière classique, l'extrémité aval 24b se termine par une protubérance axiale annulaire 24g en prolongeant axialement le raidisseur 24fet la partie délimitant la saignée 24e située le plus en aval du tambour 24.

Si l'on se reporte à la figure 2, le tambour 24 présente, depuis son extrémité amont 24a vers son extrémité aval 24b, un profil pouvant être circonscrit dans une enveloppe annulaire 30 autour de l'axe longitudinal 12.

Plus précisément, le profil de révolution du tambour 24 s'étend de part et d'autre d'une surface de révolution moyenne engendrée par la rotation d'une génératrice 34, formée d'une ligne courbe, autour de l'axe longitudinal 12.

Comme on peut le constater sur la figure 2, les tambours de l'art antérieur ne s'écartent radialement sensiblement de cette génératrice 34 que dans quelques zones : les flasques de fixation 24c et 24d et le raidisseur 24f.

Classiquement, ce tambour 24 est issu d'une pièce de forge unique, laquelle nécessite la réalisation, habituellement par coulée de fonderie, d'un lingot de révolution présentant approximativement la forme et le volume occupé par l'enveloppe annulaire 30 visible sur la figure 2.

Si l'on partage cette enveloppe annulaire 30 en une partie d'enveloppe radialement interne 30a qui correspond à la quantité de matière nécessairement présente pour constituer ultérieurement le raidisseur 24f, et une partie d'enveloppe radialement externe 30b correspondant au reste de l'enveloppe 30, on constate aisément que la disparition de la présence du raidisseur 24f dans la pièce de fonderie initiale permettrait d'économiser une quantité de matière première significative estimée à environ un tiers.

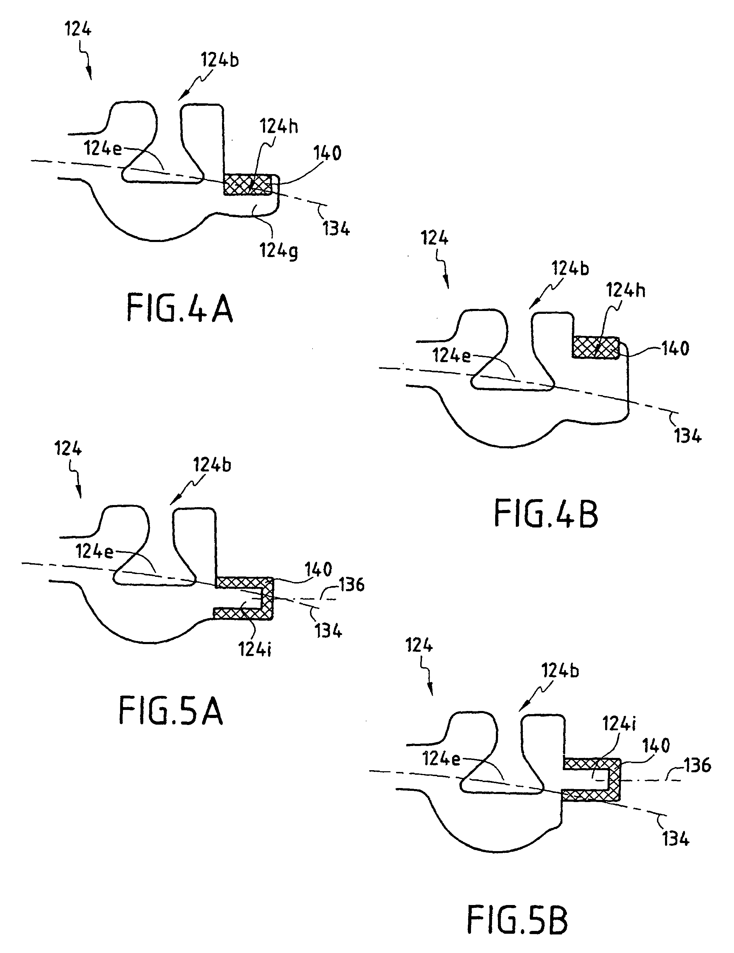

Partant de cette constatation, la présente invention permet de modifier le raidisseur 24f de l'art antérieur selon la solution visible sur les figures 4A à 5B.

Dans la suite de la description correspondant à la présentation de la présente invention, les éléments déjà décrits précédemment en relation avec l'art antérieur, présentent un signe de référence augmenté d'une valeur 100.

Comme il apparaît sur ces figures, le raidisseur 24f de l'art antérieur a complètement disparu et il a été remplacé par un ensemble composite 140 monté sur l'extrémité aval 124b.

En effet, la présente invention propose de recourir à l'utilisation d'un matériau composite comprenant des fibres et une matrice en polymère afin de former un raidisseur suffisamment résistant aux contraintes mécanique et thermique pour se substituer au raidisseur métallique 24f de l'art antérieur.

Les fibres sont de préférence des fibres longues bobinées, ces fibres apportant une grande résistance mécanique, en particulier une raideur à l'ensemble composite 140. On utilisera de préférence des fibres de carbone mais d'autres types de fibres peuvent également être utilisés, parmi lesquels le bore, le silicium, le carbure de bore et le carbure de silicium.

La matrice en polymère permet de former un ensemble composite 140 de densité faible avec une certaine résilience mécanique. On utilisera de préférence des résines de type époxyde ; des résines polyimides ou bien à base de Nylon ou de polybenzimidazole peuvent également être utilisées pour la réalisation de l'ensemble composite 140.

Selon un premier mode de réalisation illustré sur les figures 4A et 4B, la protubérance axiale annulaire 24g formant la partie située le plus en aval du tambour, délimite un logement annulaire 124h de révolution autour de l'axe longitudinal 12, ce logement 124h étant ouvert radialement vers l'extérieur, c'est-à-dire en direction opposée de l'axe longitudinal 12, de façon à pouvoir recevoir l'ensemble composite 140.

Selon une première variante de réalisation illustrée sur la figure 4A, le logement annulaire 124h s'étend de part et d'autre de la génératrice 134.

Selon une seconde variante de réalisation illustrée sur la figure 4B, le logement 124h s'étend de manière décalée vers l'extérieur par rapport à la génératrice 134 : de cette manière, l'ensemble composite bobiné 140 formant le raidisseur est excentré par rapport à cette génératrice 134. Cette solution préférentielle permet d'améliorer les performances en résistance mécanique du tambour présentant un tel agencement.

Selon un deuxième mode de réalisation illustré sur les figures 5A et 5B, l'extrémité aval 124b présente, dans sa partie située le plus en aval, de multiples protubérances axiales 124i qui sont régulièrement réparties radialement autour de l'axe longitudinal 12.

Chacune de ces protubérances axiales 124i est destinée à recevoir un ensemble composite bobiné 140 bobiné en forme de manchon autour de cette protubérance 124i.

Le manchon formé par l'ensemble composite bobiné 140 peut présenter des ouvertures à chacune de ses extrémités ou bien, de façon préférentielle comme illustré sur les figures 5A et 5B, présenter la forme en section longitudinale d'un U emmanché autour de la protubérance axiale 124i.

Ce manchon peut être cylindrique de section circulaire autour de l'axe 136, parallèle à l'axe longitudinal 12, ou bien encore présenter une section transversale allongée, par exemple ovale, oblongue ou analogue.

Selon la première variante de réalisation du deuxième mode de réalisation telle qu'elle est illustrée sur la figure 5A, les protubérances axiales 124i ainsi que les ensembles composites bobinés 140 sont centrés autour de la génératrice 134.

Dans le cas de la seconde variante de réalisation du deuxième mode de réalisation telle qu'elle est illustrée sur la figure 5B, les protubérances axiales 124i et les manchons formant les ensembles composites bobinés 140 sont excentrés, c'est-à-dire décalés, par rapport à la génératrice 134 en direction opposée par rapport à l'axe longitudinal 12, ceci pour améliorer les performances en résistance mécanique.

Il est entendu que dans les deux modes de réalisation présentés concernant l'ensemble composite bobiné 140, il est prévu d'enrouler les fibres longues soit directement autour de l'axe longitudinal 12, (figures 4A et 4B), soit autour d'un axe 136 parallèle à cet axe longitudinal 12 et qui constitue l'axe central du composite bobiné 140 en forme de manchon(figures 5A et 5B).

On comprend également que la présente invention permet de réaliser un tambour 124 présentant un coût de revient bien plus faible que ceux de l'art antérieur tout en pouvant être fabriqué de manière simple, de manière à présenter des caractéristiques, telles que des caractéristiques de résistance mécanique et de résistance thermique, au moins aussi performantes qu'avec les tambours de l'art antérieur.

## Revendications

1. Tambour (124) supportant des aubes (22), présentant une forme générale cylindrique de révolution autour d'un axe longitudinal (12), destiné en particulier à former un rotor, réalisé dans un alliage métallique et s'étendant entre une extrémité amont (24a) et une extrémité aval (24b ; 124b) le long d'un profil courbe pouvant être circonscrit dans une enveloppe annulaire (30) s'étendant autour dudit axe longitudinal (12), ledit profil s'étendant radialement autour d'une surface de révolution présentant une génératrice (134), ladite extrémité aval (124b) étant munie d'un raidisseur, **caractérisé en ce que** ledit raidisseur est muni d'au moins un ensemble composite (140) monté sur ladite extrémité aval (124b), ledit ensemble composite (140) comprenant des fibres et une matrice en polymère.

2. Tambour (124) selon la revendication 1, **caractérisé en ce qu'**il comporte une première partie métallique fabriquée en une seule pièce et une deuxième partie formée dudit raidisseur.

3. Tambour (124) selon l'une quelconque des revendications précédentes, **caractérisé en ce que** ladite extrémité aval délimite un logement annulaire (124h) d'axe coaxial avec ledit axe longitudinal, ledit logement (124h) étant ouvert radialement vers l'extérieur et **en ce que** ledit ensemble composite (140) est annulaire et bobiné autour de ladite extrémité aval (124b) en étant positionné dans ledit logement (124h).

4. Tambour (124) selon la revendication 1 ou 2, **caractérisé en ce que** ladite extrémité aval (124b) forme une série de protubérances axiales (124i) et **en ce que** ledit raidisseur est formé d'au moins un ensemble composite bobiné (140) en forme de manchon monté sur l'une desdites protubérances (124i).

5. Tambour (124) selon l'une quelconque des revendications précédentes, **caractérisé en ce que** ledit raidisseur est excentré par rapport à ladite génératrice (134).

6. Tambour (124) selon la revendication 5, **caractérisé en ce que** ledit raidisseur est excentré radialement vers l'extérieur par rapport à ladite génératrice (134).

7. Tambour (124) selon l'une quelconque des revendications précédentes, **caractérisé en ce que** ledit ensemble composite est formé de fibres longues de carbone bobinées logées dans une matrice en résine thermodurcissable.

8. Tambour (124) selon la revendication 7, **caractérisé en ce que** ladite résine thermodurcissable est de type époxy.

9. Compresseur (16) centrifuge axial comprenant, à titre de rotor, un tambour (124) selon l'une quelconque des revendications précédentes sur lequel sont fixées des aubes mobiles (22).

10. Turbo moteur à combustion, en particulier turboréacteur, comprenant un compresseur (16) selon la revendication 9.

## Patentansprüche

1. Trommel (124), die Schaufeln (22) trägt, die im allgemeinen eine um eine Längsachse (12) rotationszylindrische Form aufweist, die insbesondere dazu bestimmt ist, einen Rotor zu bilden, die aus einer Metallegierung gefertigt ist und die sich zwischen einem stromaufwärtigen Ende (24a) und einem stromabwärtigen Ende (24b; 124b) entlang eines gekrümmten Profils erstreckt, das in einer ringförmigen Hülle (30) umgrenzt werden kann, die sich um die genannte Längsachse (12) erstreckt, wobei sich das Profil radial um eine eine Mantellinie (134) aufweisende Rotationsfläche erstreckt, wobei das stromabwärtige Ende (124b) mit einer Aussteifung versehen ist, **dadurch gekennzeichnet, daß** die Aussteifung mit wenigstens einer Verbundeinheit (140) versehen ist, die an dem stromabwärtigen Ende (124b) angebracht ist, wobei die Verbundeinheit (140) Fasern und eine Polymermatrix aufweist.

2. Trommel (124) nach Anspruch 1, **dadurch gekennzeichnet, daß** sie ein erstes einstückig hergestelltes Metallteil sowie ein von der Aussteifung gebildetes zweites Teil aufweist.

3. Trommel (124) nach irgendeinem der vorhergehenden Ansprüche, **dadurch gekennzeichnet, daß** das stromabwärtige Ende eine ringförmige Aufnahme (124h) begrenzt, deren Achse mit der Längsachse koaxial ist, wobei die Aufnahme (124h) radial nach außen offen ist, und daß die Verbundeinheit (140) ringförmig ist und um das stromabwärtige Ende (124b) gewickelt und dabei in der Aufnahme (124h) positioniert ist.

4. Trommel (124) nach Anspruch 1 oder 2, **dadurch gekennzeichnet, daß** das stromabwärtige Ende (124b) eine Reihe von axialen Vorsprüngen (124i) bildet, und daß die Aussteifung von wenigstens einer hülsenförmigen, an einem der Vorsprünge (124i) angebrachten, gewickelten Verbundeinheit (140) gebildet ist.

5. Trommel (124) nach irgendeinem der vorhergehenden Ansprüche, **dadurch gekennzeichnet, daß** die Aussteifung gegenüber der genannten Mantellinie (134) exzentriert ist.

6. Trommel (124) nach Anspruch 5, **dadurch gekennzeichnet, daß** die Aussteifung gegenüber der Mantellinie (134) radial nach außen exzentriert ist.

7. Trommel (124) nach irgendeinem der vorhergehenden Ansprüche, **dadurch gekennzeichnet, daß** die Verbundeinheit von langen, gewickelten Kohlenstoffasern gebildet ist, die in einer Duroplast-Matrix gelagert sind.

8. Trommel (124) nach Anspruch 7, **dadurch gekennzeichnet, daß** der Duroplast vom Typ Epoxyharz ist.

9. Axialverdichter (16), welcher als Rotor eine Trommel (124) nach irgendeinem der vorhergehenden Ansprüche umfaßt, an der bewegliche Schaufeln (22) befestigt sind.

10. Turbo-Verbrennungsmotor, insbesondere Turbostrahltriebwerk, mit einem Verdichter (16) nach Anspruch 9.

## Claims

1. A drum (124) supporting blades (22), the drum being generally in the form of a body of revolution about a longitudinal axis (12) and being intended in particular to form a rotor, the drum being made of a metal alloy and extending between an upstream end (24a) and a downstream end (24b; 124b) along a curved profile that can be circumscribed in an annular envelope (30) extending around said longitudinal axis (12), said profile extending radially around a surface of revolution presenting a generatrix line (134), said downstream end (124b) being provided with a stiffener, the drum being **characterised in that** said stiffener is provided with at least one composite assembly (140) mounted on said downstream end (124b), said composite assembly (140) comprising fibres and a polymer matrix.

2. A drum (124) according to claim 1, **characterised in that** it comprises a first portion made as a single piece of metal and a second portion forming said stiffener.

3. A drum (124) according to any one of the preceding claims, **characterised in that** said downstream end defines an annular housing (124h) coaxial about said longitudinal axis, said housing (124h) being radially open towards the outside, and **in that** said composite assembly (140) is annular and wound around said downstream end (124b), being positioned in said housing (124h).

4. A drum (124) according to claim 1 or claim 2, **characterised in that** said downstream end (124b) forms a series of axial protrusions (124i), and **in that** said stiffener is formed by at least one wound composite assembly (140) in the form of a sleeve mounted on one of said protrusions (124i).

5. A drum (124) according to any one of the preceding claims, **characterised in that** said stiffener is off-centred relative to said generatrix line (134).

6. A drum (124) according to claim 5, **characterised in that** said stiffener is off-centred radially outwards relative to said generatrix line (134).

7. A drum (124) according to any one of the preceding claims, **characterised in that** said composite assembly is formed by wound long carbon fibres received in a matrix of thermosetting resin.

8. A drum (124) according to claim 7, **characterised in that** said thermosetting resin is of the epoxy type.

9. An axial centrifugal compressor (16) comprising, at its rotor, a drum (124) according to any one of the preceding claims and having moving blades (22) fixed thereon.

10. A combustion turboshaft engine, in particular a turbojet engine, including a compressor (16) according to claim 9.
